(19) Europäisches Patentamt
European Patent Office
Office européen des brevets

(11) Veröffentlichungsnummer: **0 077 514**
**A2**

# (12) EUROPÄISCHE PATENTANMELDUNG

(21) Anmeldenummer: **82109379.6**

(22) Anmeldetag: **11.10.82**

(51) Int. Cl.³: **D 06 P 3/70**
D 06 P 1/41, D 06 P 1/90
D 01 F 1/06, D 01 F 6/18
//C09B11/10, C09B11/26

(30) Priorität: **16.10.81 DE 3141082**

(43) Veröffentlichungstag der Anmeldung:
**27.04.83 Patentblatt 83/17**

(84) Benannte Vertragsstaaten:
**DE FR GB IT**

(71) Anmelder: **HOECHST AKTIENGESELLSCHAFT**
**Postfach 80 03 20**
**D-6230 Frankfurt/Main 80(DE)**

(72) Erfinder: **Hähnke, Manfred, Dr.**
**Behringstrasse 13**
**D-6233 Kelkheim (Taunus)(DE)**

(72) Erfinder: **Teige, Wolfgang**
**Unter den Nussbäumen 25**
**D-6233 Kelkheim (Taunus)(DE)**

## (54) Verfahren zum kontinuierlichen Färben von Fasergut von aus organischen Lösemitteln versponnenen Acrylnitril-Polymerisaten im Gelzustand.

(57) In der technisch üblichen Gelfärbung von naßgesponnenem Fasergut aus sauer-modifizierten Homo- oder Mischpolymeren des Acrylnitrils (PAC-Faser) wird stets die vom Spinnlösemittel befreite, poröse PAC-Faser in wäßrigem Bad mit wasserlöslichen kationischen Farbstoffen gefärbt. Als typische Farbstoffe von basischer Natur haben sich für diesen Zweck insbesondere Verbindungen von salzartigem Aufbau bewährt, worin das Farbstoff-Kation den chromophoren Bestandteil des Moleküls darstellt, während das farblose Farbstoff-Anion für die Löslichkeit des Produktes Sorge trägt. Obwohl sich derartige Farbstoffe aufgrund ihrer strukturellen Verhältnisse gewöhnlich durch eine gute Affinität zum Spinngut auszeichnen, bestehen Vorbehalte gegen die Verwendung derselben allerdings darin, daß eine Reihe von Anionen wegen aus Anlaß ihrer chemischen Natur auftretenden Korrosionsproblemen und wegen Unverträglichkeitserscheinungen bei Kombinationen verschiedener Farbstoffe von der Praxis nicht akzeptiert wird. Andererseits besitzt eine ganz überwiegende Mehrzahl der in stabiler Form herstellbaren anionfreien Farbstoffbasen eine so geringe Wasserlöslichkeit, daß ein Einsatz bei der üblichen, aus wäßrigem Bad stattfindenden PAC-Gelfärbung nicht in Frage kommt.

Erfindungsgemäß werden diese Nachteile dadurch behoben, daß man die sehr gute Löslichkeit der N-arylierten Carbinol- oder Anhydrobasen von basischen Farbstoffen in organischen Lösemitteln ausnutzt und unter der Voraussetzung, daß das Polymerisat aus organischem Lösemittel versponnen wird, die Gelfärbung zweckmäßig im Koagulationsbad der PAC-Faserherstellung vornimmt, wobei das Koagulationsbad dann aus einem Gemisch aus dem Spinnlösemittel und Wasser besteht und organische Lösungen der Farbstoffbasen aufweist; das Verstrecken der Fasern kann vor der Farbstoffapplikation, während des Färbevorganges selbst oder unmittelbar danach erfolgen.

Die so eingesetzten Carbinol- bzw. Anhydrobasen besitzen für sich allein noch keinen Farbstoffcharakter. Erst durch die Wechselwirkung zwischen den sauren Gruppen des Polymers und der Farbstoffbase wird das entsprechende Farbstoffsalz ausgebildet, welches kräftige Färbungen hervorbringt. Auf diese Weise werden keine fremden Anionen in das Polymerisat eingeschleppt und auch das Färbebad bleibt frei von nicht ausgenützten anionischen Bestandteilen des Farbstoffes.

EP 0 077 514 A2

Croydon Printing Company Ltd

Verfahren zum kontinuierlichen Färben von Fasergut von aus organischen Lösemitteln versponnenen Acrylnitril-Polymerisaten im Gelzustand

Die vorliegende Erfindung betrifft das kontinuierliche Färben im Zuge des Herstellungsprozesses von nach einem üblichen Naßspinnverfahren aus organische Lösemittel aufweisenden Spinnlösungen erzeugtem Fasergut, wie Faserbänder oder Fäden, aus sauer-modifizierten Polymeren oder Mischpolymeren des Acrylnitrils im Gelzustand mit organischen Lösungen von basischen Farbstoffen.

Färbetechniken auf der zuvor erwähnten Grundlage, bei welchen man das Spinnerzeugnis im Anschluß an den eigentlichen Faserbildungsvorgang der Einwirkung einer Färbeoperation aussetzt, sind seit langem bekannt. Sie weisen den Vorteil auf, daß die Faser in dem gequollenen, gelartigen Zustand in besonderer Weise aufnahmefähig für Farbstoffe ist. Eine Färbung kann aufgrund dieser außergewöhnlichen Beschaffenheit des Spinnguts somit unter wesentlich milderen Bedingungen erfolgen, als sie zum Färben von solchen Fasermaterialien benötigt werden, die bereits einer Verstreckung zur Orientierung der Makromoleküle unterworfen und getrocknet worden sind. Das bedeutet aber auch, daß man - eher als eine Ringfärbung - auf diese Weise eine vollständige Durchdringung der Faser mit dem Farbstoff bereits im Verlauf von wenigen Sekunden nach Eintauchen des Spinnguts in das Koagulationsbad erreicht, was nach vorgenommener Verstreckung und Trocknung eine Färbung ergibt, welche gewöhnlich dauerhafter, mehr licht- und waschecht sowie mit besseren Farbwerten ausfällt als es sich sonst nach den konventionellen Färbeverfahren realisieren läßt. Man kann sich dies als Ergebnis der Infusion des Farbstoffes unter Zuhilfenahme des Koagulationsbades in die soeben ausgefällte Polymermasse vorstellen, die in das

aus dem Polymerisat geformte Gebilde eindringen und dort gegen das in dem betreffenden Fall benutzte Spinnlösemittel ausgetauscht werden.

Obwohl die Färbung im Gelzustand, d.h. praktisch während der Faserbildung, gegenüber den dafür bis dahin üblichen Methoden eine Reihe von Verfahrensstufen überflüssig macht, so erwies sich diese neuartige Arbeitstechnik dennoch immer noch nicht vollständig zufriedenstellend. Demzufolge wurden Versuche mit dem Ziel unternommen, die Anfärbbarkeit der Faser unmittelbar nach dem Verspinnen derselben zu verbessern, sei es durch Modifikation des Fasermaterials selbst, d.h. Einbau wie Einpolymerisieren in die Faserstruktur von besonderen Zentren mit erhöhter Aufnahmefähigkeit für einen (oder auch mehrere) geeigneten Farbstoff-Typ(en) von spezifischer Substantivität je nach Art des Modifikationscharakters; durch Auffindung geeigneter Farbstoffklassen, die in dem gegebenenfalls anorganische Salze enthaltenden Koagulationsbad bei den dort in Betracht kommenden Temperaturen ausreichend löslich sind; oder durch strukturelle Veränderungen innerhalb des Moleküls der für brauchbar angesehenen Farbstoffe. Schließlich liefen Untersuchungen dieser Art auch darauf hinaus, durch Variation der Verfahrensbedingungen, insbesondere des Behandlungsmediums, zu einem schnellen, wirksamen sowie leistungsfähigen, kontinuierlich arbeitenden Färbeprozeß zu gelangen.

So ist die US-PS 3 242 243 damit befaßt, die Auswahlkriterien von im Rahmen des Naßspinnprozesses von Acrylnitril-Polymerisaten für die Gelfärbung einsetzbaren Farbstoffen zu präzisieren, wobei insbesondere der Einfluß des Spinnlösemittels sowie die Zusammensetzung des Koagulationsbades in Bezug auf die Anwendbarkeit von unterschiedlichen Farbstoffklassen in die Überprüfung mit einbezogen worden sind. Hierbei hat man erkannt, daß es nicht allein auf die Löslichkeit des benutzten Farbstoffes im Koagulationsbad ankommt, sondern daß darüber hinaus das in dem flüssigen Koagulationsbad vorhandene Fällungsmittel bzw. Nichtlösemittel für das ausgesponnene Polymerisat gleichzeitig ein Lösemittel für das bei der Extrusion des Faserguts mitgerissene Spinnlösemittel sein oder damit mischbar sein muß, wodurch sich dasselbe vom koagulierenden bzw. ausfallenden Polymer entfernen läßt, als Voraussetzung dafür anzusehen ist, damit eine ausreichende Farbstoffaufnahme in dem begrenzten Raum und der begrenzten Kontaktzeit, die praktisch bei einer Spinnstraße vorliegen, erzielt wird. Hinsichtlich des Färbevorgangs bei Vorliegen nicht-wäßriger Systeme wird angenommen, daß im Falle der Verwendung von aliphatischen Kohlenwasserstoffen oder anderen nicht-wäßrigen, gut diffundierbaren Fällungsmitteln im Koagulationsbad derselbe Infusions- und Austauschmechanismus der organischen Flüssigkeit bei gleichzeitigem Ausziehen des Farbstoffes wie in wäßrigen Systemen gegeben ist, während bei Einsatz höhermolekularer Substanzen als Fällungsmittel nur eine geringere Infusion in das geformte polymere Gebilde zustande kommt, dafür aber infolge verbesserter Löslichkeitsbedingungen das Farbstoffangebot in höherer Konzentration für die Gelfärbung zur Verfügung steht.

Einige der Probleme, die in dieser Hinsicht beim kontinuierlichen Färben von Polyacrylnitril-Spinnkabel im hydratisierten Gelzustand noch auftreten, wobei die Fasern mit einstellbarer Geschwindigkeit nach der Faserbildung durch eine entgegenströmende Färbeflotte bewegt werden, hat man gemäß DE-AS 20 63 179 dadurch zu lösen gesucht, daß die relative Geschwindigkeit der Fasern zur Färbeflotte und die Farbstoffkonzentration der Färbeflotte an der Faseraustrittsstelle aus der Färbeflotte so eingestellt werden, daß die Farbstoffkonzentration an der Faseraustrittsstelle angenähert

Null ist. Unter Zuhilfenahme dieser Arbeitsweise sollten vor allem die Schwierigkeiten behoben werden, welche mit der Konstanthaltung der Farbstoffkonzentration im Färbebad im Zusammenhang stehen, woraus widrigenfalls unerwünschte Endenungleichheit resultiert. Vorbedingung für die Durchführbarkeit des Gegenstromprinzips zum Färben ist allerdings eine gute Wasserlöslichkeit der entsprechenden Farbstoffe.

Zur Steigerung der Effizienz einer Flüssigkeitsbehandlung von einem Polyacrylnitril-Faserkabel, z.B. mit einer Färbeflüssigkeit, ist man laut DE-OS 21 32 030 auch schon dazu übergegangen, das Kabel während dieser Operation durch eine räumlich beschränkte Zone zu leiten und innerhalb dieser die erhitzte Flotte mit bestimmter Fließgeschwindigkeit quer durch das kontinuierlich laufende Fasergut zu pressen. Auch hier steht für den Erfolg dieses bekannten Verfahrens die Löslichkeit der verwendeten Farbstoffe im Spinn- und Färbebad obenan.

Es ist bekannt, daß konventionelle basische Farbstoffe, welche sich gewöhnlich durch eine gute Affinität gegenüber Acrylnitrilpolymer- und Copolymerfasern auszeichnen, in einer Reihe von solchen hochpolaren organischen Lösemitteln schlecht löslich sind, die ihrerseits das Spinnlösemittel für diese Faserart im Rahmen des Naßspinnprozesses bilden. Aufgrund dieses Befundes wird die Anwendbarkeit dieser Farbstoffkategorie bei allen denjenigen Gelfärbeverfahren eingeschränkt, gemäß denen der Spinn- und der unmittelbar darauf folgende Färbevorgang in einem Koagulationsbad auf Basis derartiger organischer Lösemittel erfolgt. Wie jedoch entsprechend der DE-OS 29 07 986 festgestellt worden ist, läßt sich durch gewisse Modifikationen der Struktur der erwähnten basischen Farbstoffe ihre Löslichkeit in den in Betracht gezogenen Lösemitteln verbessern. Zusätzlich verleihen diese Modifikationen

den basischen Farbstoffen eine wirkliche Unlöslichkeit in Wasser, was sich wiederum günstig auf das Verhalten von mit solchen Farbstoffen erzeugten Färbungen bei einem Waschprozeß zur Fertigstellung des so gefärbten Fasergutes auswirkt. Als typische Farbstoffe von basischer Natur, deren Löslichkeit im obengenannnten Sinne vorteilhaft durch ihre strukturellen Verhältnisse beeinflußt wird, werden laut DE-OS 29 07 986 Verbindungen von salzartigem Aufbau entsprechend der allgemeinen Formel $D^{(+)}X^{(-)}$ vorgestellt, die aus dem Farbstoff-Kation $D^{(+)}$ bestehen, welches den chromophoren Bestandteil darstellt und das im Vergleich zum farblosen Farbstoff-Anion $X^{(-)}$, welches hauptsächlich für die Löslichkeit des Produktes verantwortlich ist, den verhältnismäßig größeren Teil des Moleküls (höheres Kationgewicht) ausmacht. Ein solches Farbstoff-Kation $D^{(+)}$ kann dabei der Gruppe der Monoazo-, Disazo-, Methin-, Azomethin-, Diarylmethan-, Triarylmethan-, Oxazin-, Anthrachinon-, Naphthostyryl-, Chinophthalon- oder Benzimidazol-Farbstoffe angehören. Darüber hinaus zählen nach dem beschriebenen Verfahren zu den als brauchbar erkannten Farbstoffen auch die freien Farbstoffbasen aus der Reihe von Monoazo- und Anthrachinon-Verbindungen, wobei es im Falle der zuletzt genannten ungeladenen Farbstoffe als charakteristisch zu betrachten ist, daß diese als freie Base den gleichen Farbton auf dem Polymerisat liefern wie analoge Farbstoffe es in Form eines Salzes der Formel $D^{(+)}X^{(-)}$ tun, d.h., es findet durch den Übergang von Farbstoffsalz in Farbstoffbase keine Veränderung des chromophoren Systems statt. Für Farbstoffbasen, bei denen durch Salzbildung eine völlige Veränderung des chromophoren Systems eintritt, finden sich hingegen keine Anhaltspunkte in der in Rede stehenden Druckschrift; ihre Eignung für das Gelfärben von Polyacrylnitril-Spinnfasern war nach den damaligen Erkenntnissen auch nicht zu erwarten gewesen.

Bei dem während des Färbevorgangs mit den hierbei in Frage kommenden Farbstoffen vom Typ $D^{(+)}X^{(-)}$ ablaufenden Chemismus wird immer nur das Farbstoff-Kation insbesondere durch den gegebenenfalls aufgrund einer sauren Modifikation der Faser vorhandenen anionischen Rest an das Acrylnitrilpolymer gebunden, wogegen das Farbstoff-Anion stets im Färbebad zurückbleibt. Das bedeutet aber, daß bei einem kontinuierlichen Färbeprozeß unter laufendem Nachsatz von Farbstoff sich das Anion unter Bildung der entsprechenden Säure oder eines entsprechenden farblosen Salzes immer mehr im Färbebad anreichert. Das führt wiederum dazu, daß im Falle entsprechend hoher Konzentration dieser Anionen in der Flotte die Fixierung des Farbstoffs zunehmend schlechter sowie schwieriger wird und daß außerdem die Fasereigenschaften darunter leiden. Ersetzt man nunmehr diese "verdorbene" Färbeflotte durch frische Färbeflotte und führt die "verdorbene" Färbeflotte der technisch üblichen destillativen Lösemittelrückgewinnung zu, so geht als eine Folge der beim Färben aus den benutzten Färbebädern nur mäßigen Farbstoff-Fixierung im Polymer somit beim Aufarbeitungsvorgang sehr viel unverbrauchter Farbstoff verloren. Außerdem gibt der schädliche Einfluß des Farbstoff-Anions Anlaß zu starken Korrosionserscheinungen in der Rückgewinnungsanlage, dies insbesondere deshalb, weil die leicht zugänglichen und daher meist verbreiteten Anionen das Chlorid-Ion und das Chlorozinkat-Ion sind, welche ——›
alle stark korrodierende Wirkung aufweisen. Darüber hinaus kommt es im Verlauf des Recyclings bei gewissen Anionen, wie z.B. dem Methosulfat-Ion, im Falle von starker destillativer Beanspruchung zur Bildung von Zersetzungsprodukten, so daß das Destillat an dem wiedergewonnenen Lösemittel verunreinigt wird. Zusätzlich können bei gemeinsamer Verwendung kationischer Farbstoffe von unterschiedlich salzartigem Bauprinzip aufgrund eines möglichen, gegenseitigen Austausches der

Anionen unerwünschte Ausfällungen im Färbebad auftreten. Wegen der anzutreffenden Korrosionsprobleme und wegen der Unverträglichkeitserscheinungen bei Kombinationen verschiedener Farbstoffe wird eine Reihe solcher ansonsten interessanter sowie preiswerter Farbstoff-Anionen von der Praxis nicht akzeptiert.

Die Aufgabe der vorliegenden Erfindung liegt nunmehr darin, das zuvor besprochene Verfahrensprinzip zum kontinuierlichen Färben von Acrylnitril-Polymerisaten unter Beibehaltung seiner Einfachheit auch für weitere Abkömmlinge aus der Reihe von basischen Farbstoffen zu erschließen, wobei es insbesondere galt, die aufgezeigten Probleme im Zusammenhang mit der Gelfärbung auszuschalten, die geschilderten Mängel zu beseitigen und die sich gemäß den bisherigen Färbungen ergebenden, aber nicht ausreichenden Fixierungseigenschaften zu verbessern.

Diese Aufgabe wird erfindungsgemäß dadurch gelöst, daß man das im Gelzustand vorliegende Fasergut aus den eingangs näher definierten Acrylpolymerisaten mit Lösungen der Carbinolbasen oder Anhydrobasen aus der Reihe von carboxyl- oder sulfogruppenfreien, N-arylierten Triarylmethan-, Diarylidolylmethan-, Oxazin-, Xanthen- oder Azin-Farbstoffen in einem das organische Spinnlösemittel und Wasser enthaltenden Färbebad färbt.

Hierbei handelt es sich zweckmäßig um solche Farbstoffbasen, die eine oder mehrere, bevorzugt 1 bis 4 Arylaminogruppen enthalten. In diesen Arylaminogruppen kann der Arylrest nichtionogene Gruppen besitzen. Arylaminogruppen sind insbesondere sekundäre, in den Kernen gegebenenfalls durch niedere Alkyl-, niedere Alkoxy-, bevorzugt Methyl-, Methoxygruppen, und/oder Chlor- oder Bromatome substituierte Phenylamino- und Naphthylaminogruppen.

Besonders vorteilhaft sind für die Verwendung beim erfindungsgemäßen Verfahren N-arylierte Carbinolbasen oder Anhydrobasen geeignet, die den folgenden allgemeinen Formeln entsprechen:

<u>Triarylmethan-Reihe</u>

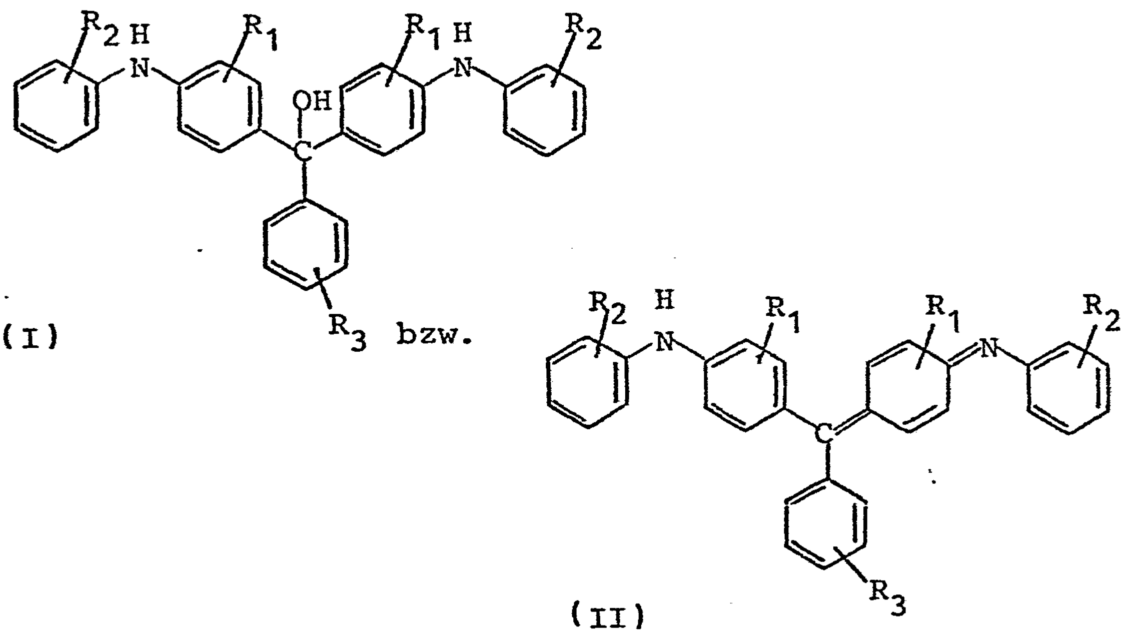

(I) bzw.

(II)

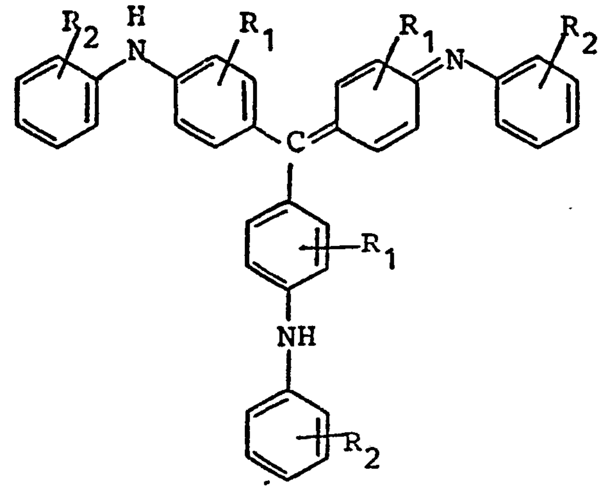

(IV)

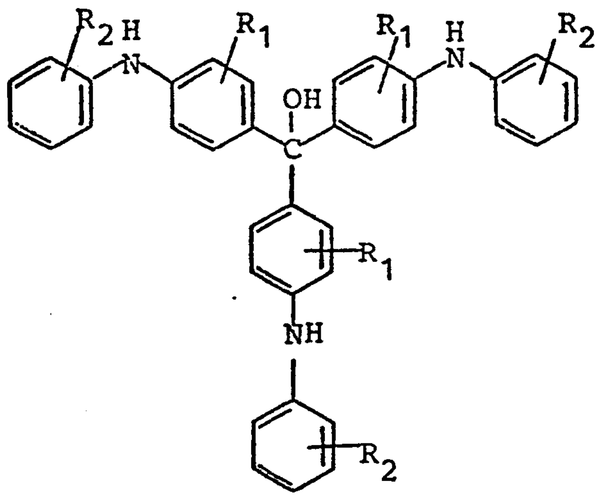

(III)

Diarylinddylmethan-Reihe

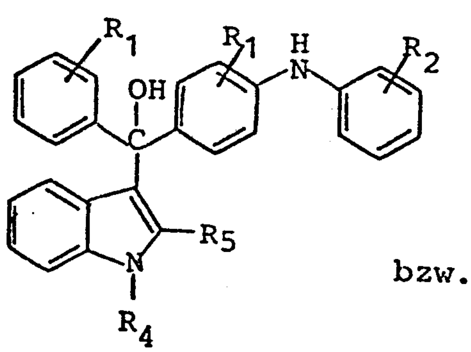

(V)

bzw.

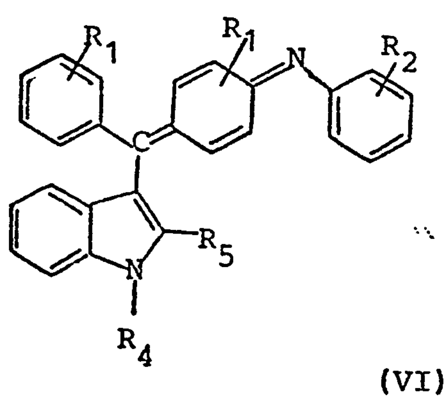

(VI)

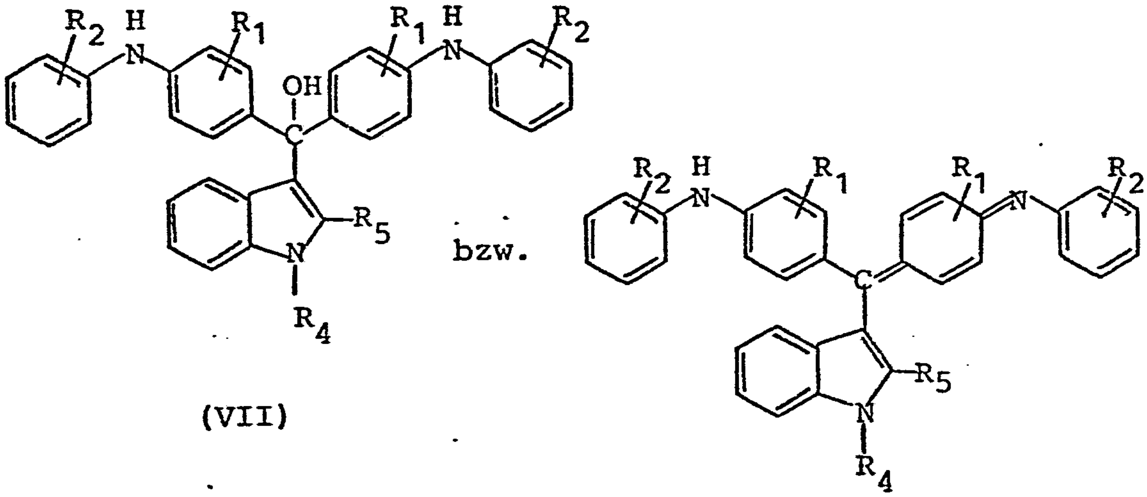

bzw.

(VII)

(VIII)

Xanthen-Reihe

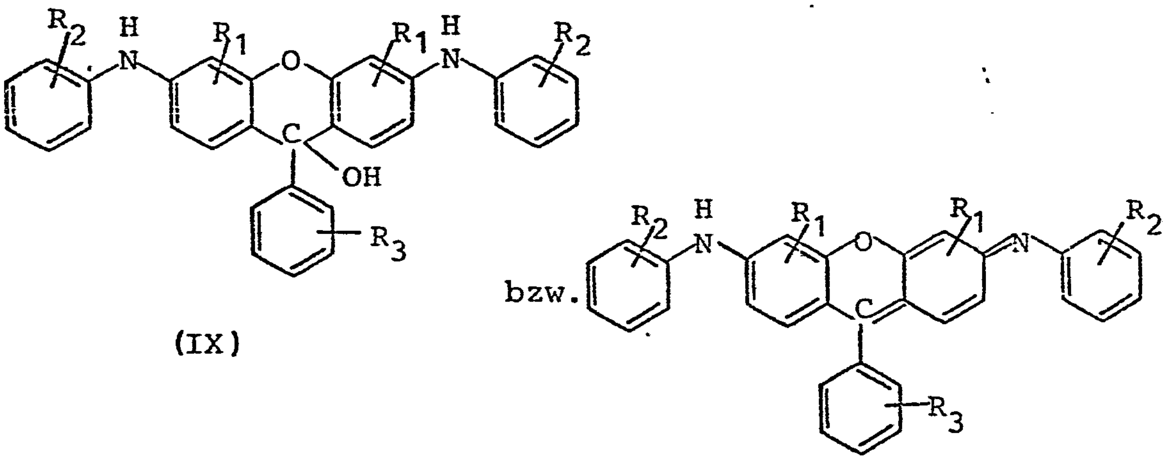

bzw.

(IX)

(X)

Oxazin-Reihe

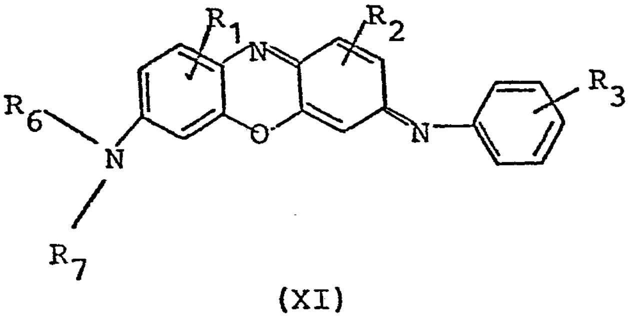

(XI)

Azin-Reihe

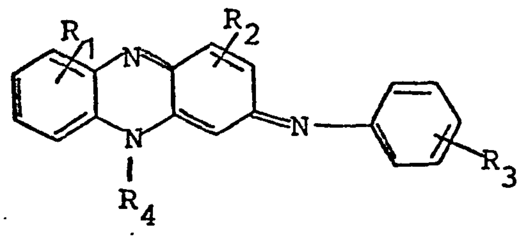

(XII)

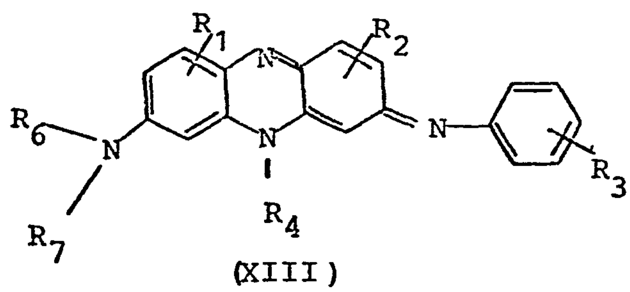

(XIII)

In diesen vorstehend aufgeführten allgemeinen Formeln (I) bis (XIII) bedeuten:

$R_1$, $R_2$ und $R_3$ jedes ein Wasserstoffatom oder ein Halogenatom (wie Fluor, Chlor oder Brom), eine niedere Alkylgruppe mit 1 bis 3 C-Atomen (wie Methyl oder Ethyl) mit gegebenenfalls einem nichtionogenen Substituenten oder eine niedere Alkoxygruppe mit 1 bis 3 C-Atomen (wie Methoxy oder Ethoxy), wobei $R_1$, $R_2$ und $R_3$ gleich oder voneinander verschieden sind, $R_3$ zusätzlich eine in p-Stellung zum zentralen Kohlenstoffatom stehende Aminogruppe darstellen kann, und wobei $R_1$ und $R_2$ an dem zugehörigen Benzolring auch zweimal enthalten sein oder beide zusammen sowie der zugehörige Benzolring unter Ringschluß miteinander verbunden sein und einen Naphthalinrest bilden sowie an dem ankondensierten Benzolring dann zusätzlich noch nichtionogene Substituenten wie die Phenylaminogruppe besitzen können;

$R_4$ ein Wasserstoffatom, eine niedere Alkylgruppe mit 1 bis 6 C-Atomen, oder ein Arylrest wie ein gegebenenfalls durch Halogenatome (wie Chlor), niedere Alkylgruppen (wie Methyl) oder niedere Alkoxygruppen substituierter Phenyl oder Naphthylrest;

$R_5$ ein Wasserstoffatom, eine niedere Alkylgruppe mit 1 bis 4 C-Atomen (wie Methyl), oder ein Arylrest (wie Phenyl);

$R_6$ und $R_7$ jedes ein Wasserstoffatom, eine gegebenenfalls nichtionogene Substituenten (wie Chlor) aufweisende niedere Alkylgruppe mit 1 bis 6 C-Atomen (wie Methyl oder Ethyl), oder ein Arylrest (wie Phenyl), der gegebenenfalls nichtionogene Substituenten (wie Chlor) ein- oder mehrfach enthalten kann, oder ein Aralkylrest (wie Benzyl oder Phenethyl).

Die erfindungsgemäß eingesetzten Carbinol- oder Anhydrobasen von basischen Farbstoffen des zuvor erläuterten Typs sind auf bekannte Weise z.B. aus den entsprechenden Farbstoffsalzen durch Umsetzung mit Alkalien, wie beispielsweise Natronlauge, Kalilauge, Soda oder Ammoniak oder anderen, vergleichbar starken organischen Aminen, herstellbar. Einige der nach dem neuen Verfahren zu verwendenden Farbstoffe fallen aber auch bereits bei der Synthese in Form ihrer Farbstoff-Base an. Wegen ihrer Wasserunlöslichkeit lassen sie sich verhältnismäßig leicht aus den Reaktionslösungen isolieren.

Beim Gegenstand der vorliegenden Erfindung handelt es sich um ein Verfahren zum Färben von Fasergut,wie Faserbänder oder Fäden, aus sauer-modifizierten Acrylnitrilpolymerisaten im Gelzustand, die nach einem üblichen Naßspinnverfahren hergestellt worden sind. Aufgrund der Tatsache, daß die Färbung der versponnenen Polymerisate des Acrylnitrils erfindungsgemäß aus lösemittelhaltigen Flotten erfolgt, werden Waschprozesse,

bei denen man die Fäden von dem zur Herstellung der Spinnlösung verwendeten Lösemittel befreit, überflüssig, d.h. die Färbeoperation läßt sich ohne Veränderung der für das Verspinnen und Fertigstellen ungefärbter Fäden benötigten und praxisüblichen maschinellen Ausrüstung durchführen. Im Rahmen des beanspruchten Verfahrens, unter Einsatz der in den vorstehenden Erläuterungen als brauchbar bezeichneten Abkömmlinge von basischen Farbstoffen, eignen sich Färbebäder, welche aus einem Gemisch von 30 bis 80 Gew.-%, vorzugsweise 40 bis 60 Gew.-%, des auch zur Herstellung der Spinnlösung (d.h. zum Verspinnen des Polymerisats) verwendeten organischen Lösemittels und Wasser, sowie der erfindungsgemäß ins Auge gefaßten Carbinol- oder Anhydrobase bestehen. Prinzipiell wird ohne Zugabe einer Säure gearbeitet, zur Konstanthaltung eines pH-Werts nahe dem Neutralpunkt kann jedoch der Behandlungsflotte eine kleine Menge einer organischen Carbonsäure zugegeben werden.

Zum Färben werden im vorliegenden Falle die unverstreckten Fasern oder Fäden - ohne getrocknet zu sein - bei Temperaturen zwischen 10° und 100°C, vorzugsweise zwischen 20° und 80°C, mit den in dem lösemittelhaltigen Färbemedium gelösten Farbstoffen behandelt. Die Färbezeit beträgt im allgemeinen zwischen 0,5 und 20 Sekunden, vorzugsweise wird zwischen 2 und 20 Sekunden gefärbt. Die angeführte Färbedauer entspricht der Kontaktzeit (Verweilzeit) des Polymers mit der Farbstofflösung nach der Verspinnung.

Die Färbeoperation selbst wird verfahrensgemäß kontinuierlich im Verlauf des Herstellungsprozesses der Fasern, Bänder und Fäden vorgenommen, d.h. solange die frisch versponnenen Acrylnitril-Polymerisate in gelartiger Form vorliegen. Sie kann während des oder kurz nach dem

Koagulationsvorgang des Polymers durchgeführt werden. Das bedeutet somit, daß das Koagulationsbad oder auch ein nachfolgendes Naßverstreckungsbad oder auch ein Relaxationsbad das eigentliche Färbebad verkörpern kann.

Das Färbebad im Sinne der zuvor dargelegten Variationsmöglichkeit kann ein ruhendes Medium darstellen,durch welches man das Spinngut nach dem Austreten aus der Düse und dem dann erfolgenden Koagulieren führt. Während des Färbens wird bei kontinuierlich durchlaufendem Fasermaterial die Zusammensetzung des Färbebades ständig konstant gehalten, indem man auf geeignete Weise z.B. eine Lösung des Farbstoffes in einer derartigen Konzentration zugibt, daß der durch die Faserbänder bzw. Fäden aufgenommene Farbstoff fortlaufend ersetzt wird. Damit eine optimale Ausnutzung der Färbeflotte möglich ist, kann vorteilhafterweise die Färbeflotte auch im Gegenstrom zur Fortbewegungsrichtung der Fasern oder auch im Querstrom durch das laufende Polymerkabel geführt werden. In diesen beiden letzten Fällen ergibt sich eine besonders hohe Fixierausbeute der erfindungsgemäß eingesetzten Carbinol- oder Anhydrobasen im Polymer, so daß das nur noch Lösemittel und Wasser enthaltende, vom Farbstoff weitgehend erschöpfte Färbebad direkt zur destillativen Lösemittelrückgewinnung geleitet werden kann.

Die gefärbten Faserbänder bzw. Fäden werden anschließend unter praxisüblichen Bedingungen mit Dampf oder Heißluft fixiert, verstreckt, aviviert und gegebenenfalls unter Zulassung von Schrumpf getrocknet, gekräuselt und in Kartons abgelegt. Das Verstrecken des extrudierten Polymers kann man verfahrensgemäß jedoch auch bei dem Färbevorgang selbst vornehmen.

Neben den Polymeren des Acrylnitrils kommen für den Einsatz nach dem beanspruchten Verfahren als zu verspinnende Substrate Mischpolymerisate des Acrylnitrils mit anderen Vinylverbindungen, wie z.B. Vinylidencyanid, Vinylidenchlorid, Vinylchlorid, Vinylfluorid, Vinylacetat, Vinylpropionat, Vinylpyridin, Vinylimidazol, Vinylpyrrolidon, Vinylethanol, Acryl- oder Methacrylsäure, Acryl- oder Methacrylsäureester, Acryl- oder Methacrylsäureamide in Betracht, wobei diese Mischpolymerisate mindestens 50 Gew.-%, vorzugsweise mindestens 85 Gew.-% Acrylnitril-Einheiten aufweisen. Die verwendeten Homopolymerisate von Acrylnitril oder dessen Mischpolymerisate sind stets sauer modifiziert; sie enthalten mindestens eine saure Funktion, wie z.B. Sulfo- oder Sulfatogruppen, welche mittels eines Katalysators jeweils in das Ende der Polymerisatketten eingeführt, oder als saure Gruppen enthaltende Comonomere, wie z.B. Acrylsäure, Itaconsäure, Vinylsulfonsäure, Styrolsulfonsäure, Allylsulfonsäure, Methallylsulfonsäure, Vinyloxyarensulfonsäure, Allyloxyarensulfonsäure, Methallyloxyarensulfonsäure, Acryloxyalkoxyarensulfonsäure einpolymerisiert werden.

Es sind erfindungsgemäß also alle Acrylnitrilpolymerisate geeignet, welche zur Bindung der verwendeten Farbstoffbasen befähigende saure Gruppen enthalten. Solche sauren Gruppen sind in dem Spinngut in Mengen zwischen 10 und 150 Milliäquivalent pro kg Polymerisat, vorzugsweise zwischen 20 und 80 Milliäquivalent pro kg Polymerisat vorhanden.

Die in den erfindungsgemäß verwendeten Färbebädern enthaltenen organischen Lösemittel gehören zur Gruppe der polaren aprotischen, mit Wasser in jedem Verhältnis mischbaren Verbindungen. Sie stellen gleichermaßen

auch die zur Herstellung der Spinnlösung des Polymers verwendeten Lösemittel dar. Zu diesen für den Spinnprozeß sowie die darauf folgende Färbeoperation geeigneten organischen Flüssigkeiten gehören z.B. Dimethylformamid, N-Methylpyrrolidon-(2), ß-Butyrolacton, Tetramethylensulfon, Aceton, Dimethylacetamid, Dimethylsulfoxid oder Ethylencarbonat.

Die nach dem beanspruchten Verfahren einsetzbaren Carbinol- oder Anhydrobasen besitzen bereits bei Raumtemperatur eine ausgezeichnete Löslichkeit in den das organische Spinnlösemittel enthaltenden Koagulations- oder Naßverstreck-Bädern,sodaß diese als das eigentliche Färbemedium benutzt werden können. Diese Löslichkeit ist um so höher, je höher der Lösemittelgehalt im Koagulations- oder Naßverstreckbad ist, wobei durch Temperaturerhöhung sich die Löslichkeit der Farbstoff-Basen nochmals beträchtlich steigern läßt. Demzufolge kann die Konzentration der Farbstoff-Basen in der Färbeflotte zweckmäßig zwischen nahezu null und etwa 20 Gew.-%, vorzugsweise zwischen nahezu null und etwa 5 Gew.-% betragen. Die Farbstoffbasen lassen sich aber auch in Form einer konzentrierten Lösung in einem anderen organischen Lösungsmittel als z.B. dem betreffenden Spinnlösungsmittel dem Färbebad zugeben und können somit zum Schärfen der an Farbstoff verarmten Flotte herangezogen werden.

Die erfindungsgemäß zur Anwendung gelangenden Carbinol- bzw. Anhydrobasen besitzen für sich allein zunächst noch keinen Farbstoffcharakter. Bei der Behandlung von faserigen Substanzen synthetischer Natur (ohne spezielle Modifikation) unter den bisher üblichen Bedingungen ergeben sie in allen Fällen einen anderen Farbton, als ihn der in Salzform vorliegende entsprechende Farbstoff sonst aufweist, und nur eine niedrige Farbstärke. Erst

durch die Reaktion mit den anionischen Gruppen des Polymers geht die Farbstoff-Base in das entsprechende Farbstoffsalz über, d.h. es bildet sich der fertige Farbstoff aus.

Die auf dieser Grundlage mit N-arylierten Carbinol- oder Anhydrobasen von basischen Farbstoffen erfindungsgemäß erzeugten Färbungen auf sauer-modifizierten Polyacrylnitril-Polymerisaten weisen eine außerordentlich hohe Farbstärke und brillante Farbnuancen auf. Die hierbei erzielten Echtheiten wie Licht-, Wasser-, Schweiß-, Trockenreinigungs- und Reibechtheit sind außerordentlich hoch. Insbesondere ist die verbesserte Lichtechtheit der gemäß den beanspruchten Verfahren gefärbten Fasern hervorzuheben, die deutlich höher liegt als bei Färbungen mit den entsprechenden nicht N-arylierten Verbindungen. Weiterhin besitzen die mit den erfindungsgemäß eingesetzten Farbstoff-Basen gefärbten Materialien überlegene Naßechtheiten gegenüber solchen Färbungen, die mit vergleichbaren nicht N-arylierten Verbindungen hergestellt worden sind.

Die N-arylierten Carbinol- und Anhydrobasen von basischen Farbstoffen sind chemisch stabil und als solche gut isolierbar, wohingegen die meisten Vertreter derartiger nicht N-arylierter Verbindungen sich als instabil erweisen. Darüber hinaus zeigt eine ganz überwiegende Mehrzahl der in stabiler Form herstellbaren anionfreien Farbstoffbasen eine so geringe Wasserlöslichkeit, daß ein Einsatz bei der üblichen, aus wäßrigem Bad stattfindenden Polyacrylnitril-Gelfärbung nicht in Frage kommt. Umgekehrt hat dieses Verhalten aber wiederum zur Folge, daß bei der sich auf die Färbeoperation anschließenden Wasch- und Avivagebehandlung im Falle der N-arylierten Carbinol- und Anhydrobasen praktisch kein Ausbluten verursacht wird.

Durch den besonderen Bindungschemismus zwischen Farbstoff-Base und sauer-modifiziertem Polymer werden nach der vorliegenden Erfindung somit keine fremden Anionen mit in das Polyacrylnitril eingebracht. Aufgrund der Abwesenheit von Anionen besteht beim beanspruchten Verfahren aber auch keine Gefahr, daß es - wie bei den herkömmlichen Färbeweisen auf Basis von Farbstoffsalzen - unerwünschterweise zur Anreicherung der beim Färben nicht ausgenutzten anionischen Bestandteile des Farbstoffes im Färbebad und so zu Schwierigkeiten kommt. Schließlich resultiert aus diesem Sachverhalt als weiterer Vorteil, daß im Falle des Einsatzes eines Gemisches von zwei oder mehreren der erläuterten Carbinol- bzw. Anhydrobasen miteinander oder untereinander keine gegenseitige Ausfällung auftreten kann, es liegt also beim erfindungsgemäßen Verfahren eine unbegrenzte Kombinierbarkeit vor. Diese Möglichkeit gilt auch für die Anwendung der Carbinol- bzw. Anhydrobasen des Typs laut Erfindung gemeinsam mit freien Farbstoff-Basen anderer Konstitutionen.

Die nachstehenden Beispiele dienen zur Erläuterung der Erfindung. Die darin angegebenen Teile und Prozentangaben sind Gewichtsteile und Gewichtsprozente, sofern nichts anderes vermerkt ist.

Beispiel 1:

Ein Acrylnitril-Mischpolymerisat aus 94 % Acrylnitril, 5 % Acrylsäuremethylester und 1 % Na-Methallylsulfonat wird in Form einer 28%igen Spinnlösung in Dimethylformamid unter Standardbedingungen bei 80°C durch eine 100-Loch-Spinndüse mit einem Lochdurchmesser von 80 µm naß versponnen, wobei man ein Koagulationsbad (Färbebad) von 50°C verwendet, welches aus 50 % Dimethylformamid, 48 % Wasser und 2 % der Carbinolbase eines Triphenylmethan-Farbstoffes der folgenden Konstitution

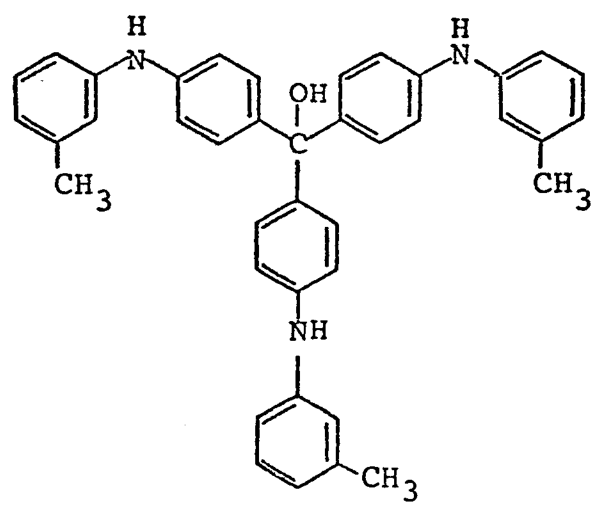

besteht (die Farbstoff-Base ist in dieser Flotte gelöst) und dessen pH-Wert durch Zugabe von Essigsäure auf 7 gehalten wird . Das so erzeugte Faserkabel wird nach einer Kontaktzeit (Färbezeit) von 5 sec. wieder aus diesem Bad herausgeführt und das gefärbte Fasergut wird sodann in üblicher Weise durch Verstrecken, Waschen, Dämpfen, Avivieren, Trocknen, Kräuseln und Schneiden fertiggestellt.

Man erhält auf der Ware eine klare blaue Färbung mit ausgezeichneten Echtheiten.

Beispiel 2

Verwendet man zur Herstellung des Faserkabels die gleiche Spinnlösung wie in Beispiel 1, verspinnt das Polymer jedoch in ein Koagulationsbad (Färbebad), welches aus 50 % Dimethylformamid, 49,9 % Wasser und 0,1 % der im Beispiel 1 zum Färben eingesetzten Carbinolbase besteht und bewegt man dieses Koagulationsbad so im Gegenstrom zur Laufrichtung des gebildeten Faserkabels, daß unter Nachsatz von Wasser das Verhältnis von Dimethylformamid und Wasser in der Färbeflotte konstant bleibt, so tritt an der Eintrittstelle des Faserkabels in das Koagulationsbad ein von der Farbstoff-Base freies Dimethylformamid/Wasser-Gemisch aus. Auf diese Weise erzielt man ebenfalls eine klare blaue Färbung mit ausgezeichneten Echtheiten.

Beispiel 3

Nimmt man die im Beispiel 1 beschriebene Färbung nicht im Koagulationsbad, sondern in einem direkt nachfolgenden Naßverstreckteil der Spinnstraße bei 80°C sowie unter Beibehaltung der im Beispiel 1 angegebenen Badzusammensetzung vor, wobei die gesponnenen Fasern auf 200 % ihrer Ausgangslänge verstreckt werden und die Farbstoff-Flotte quer durch das Faserkabel geführt wird, so erhält man ebenfalls eine blaue Färbung mit hohen Echtheiten.

Tabellenbeispiele 4 bis 30

Zum Färben des Spinnguts können anstelle der in den vorgenannten Beispielen 1 bis 3 verwendeten Carbinolbase mit gleich gutem Erfolg auch die folgenden, formelmäßig aufgeführten Carbinol- oder Anhydrobasen von basischen Farbstoffen unter Einhaltung von sonst identischen Bedingungen eingesetzt werden:

| Beisp. | Formel | Nuance der Färbung |
|---|---|---|
| 4 | 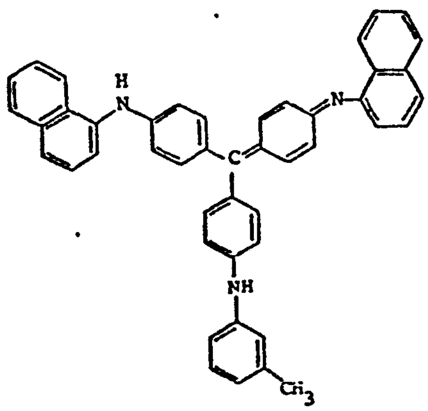 | brillantes Blau |
| 5 | 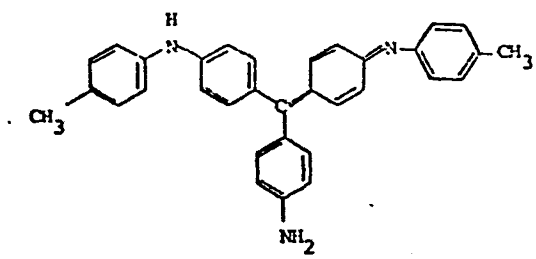 | brillantes blaustichiges Violett |
| 6 | 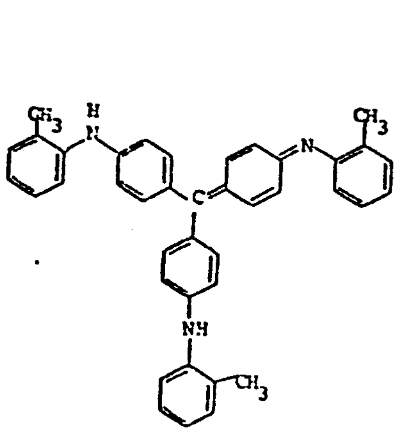 | brillantes Violett |

| Beisp. | Formel | Nuance der Färbung |
|---|---|---|
| 7 | 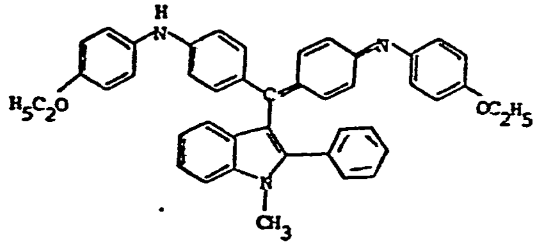 | brillantes neutrales Blau |
| 8 | 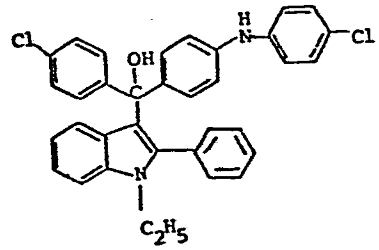 | blaustichiges Grün |
| 9 | 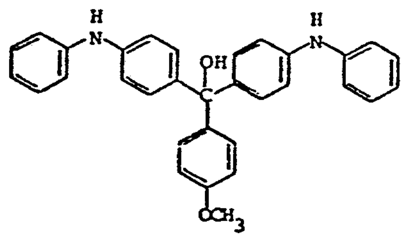 | Grün |
| 10 | 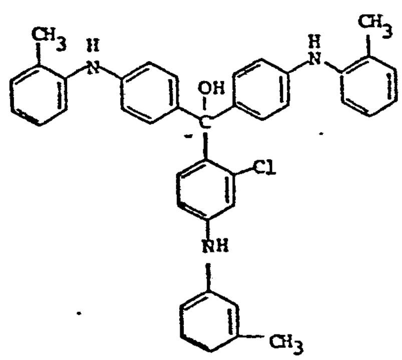 | rotstichiges Blau |
| 11 | 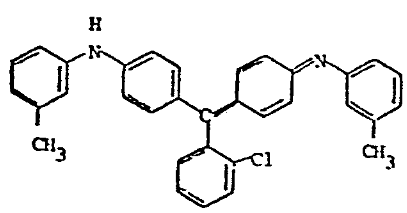 | Grün |

| Beisp. | Formel | Nuance der Färbung |
|---|---|---|
| 12 | 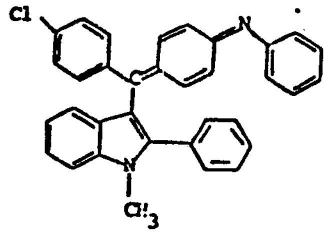 | Grün |
| 13 | 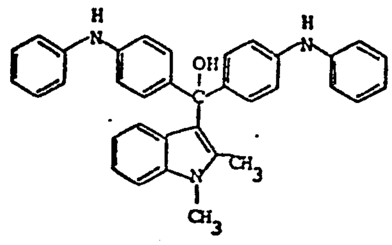 | Blau |
| 14 | 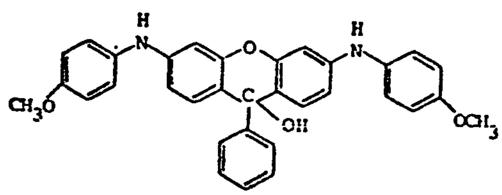 | blaustichiges Violett |
| 15 | 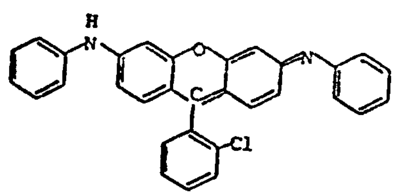 | gedecktes Violett |
| 16 | 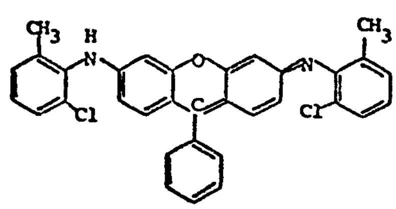 | brillantes blau-stichiges Rot |

| Beisp. | Formel | Nuance der Färbung |
|---|---|---|
| 17 | 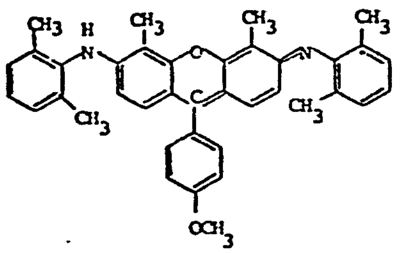 | brillantes blaustichiges Rot |
| 18 | 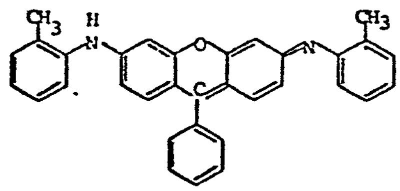 | rotstichiges Violett |
| 19 | 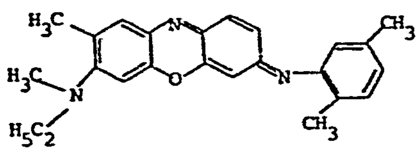 | grünstichiges Blau |
| 20 | 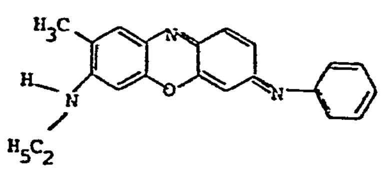 | Blau |
| 21 | 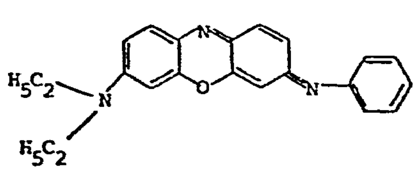 | grünstichiges Blau |

| Beisp. | Formel | Nuance der Färbung |
|---|---|---|
| 22 | 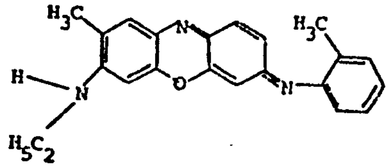 | Blau |
| 23 | 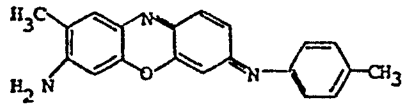 | Blau |
| 24 | 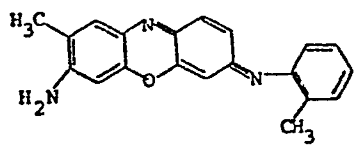 | Blau |
| 25 | 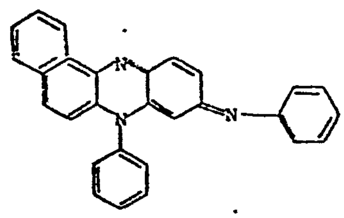 | Dunkelblau |
| 26 | 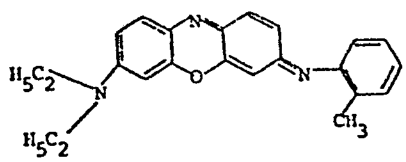 | grünstichiges Blau |
| 27 | 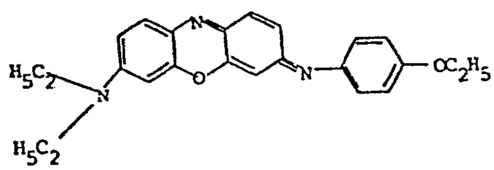 | Blau-Grün |

| Beisp. | Formel | Nuance der Färbung |
| --- | --- | --- |
| 28 | 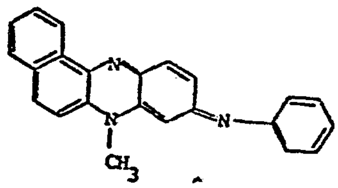 | Dunkelblau |
| 29 | 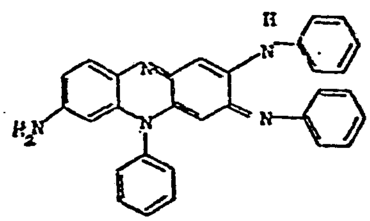 | Blau |
| 30 | 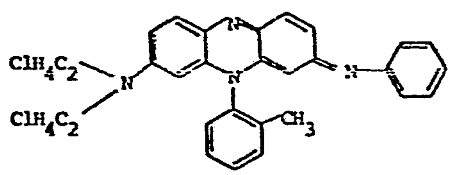 | Blau |

Beispiel 31

Alle Maßnahmen zum Färben werden wie in Beispiel 1 vorgenommen, man verwendet jedoch hier ein Koagulationsbad bestehend neben der dort angegebenen Farbstoffmenge sonst aus einem Gemisch von

55 Teilen Dimethylacetamid und
45 Teilen Wasser

bei einer Temperatur von 50°C, und erhält eine in gleicher Weise gute blaue Färbung. Spinnlösemittel ist in diesem Fall Dimethylacetamid.

Beispiel 32:

Man verfährt bei der Durchführung der Färbung wie in Beispiel 1, allerdings wird hierzu ein Koagulationsbad bestehend neben der dort vorgeschriebenen Farbstoffmenge sonst aus einem Gemisch von

60 Teilen Dimethylsulfoxid und
40 Teilen Wasser

sowie einer Temperatur von 40°C herangezogen, und erhält ebenfalls ein einwandfrei gefärbtes Fasergut mit hervorragenden Echtheiten. Spinnlösemittel ist in diesem Fall Dimethylsulfoxid.

Beispiel 33

Die Färbung wird analog Beispiel 1 hergestellt, man verwendet jedoch hier ein Koagulationsbad bestehend neben der dort angegebenen Farbstoffmenge sonst aus einem Gemisch von

60 Teilen Dimethylformamid
40 Teilen Wasser und

bei einer Temperatur von 28°C. Nach Ablauf der weiteren Behandlungsgänge wird ein Färbeergebnis entsprechend Beispiel 1 erhalten.

Beispiel 34

Man verfährt bei der Durchführung der Färbung wie in Beispiel 1, benutzt indessen dazu eine Polymermischung aus 90 Teilen Polyacrylnitril (mit 1 % einpolymerisierter Vinylsulfonsäure) und 10 Teilen Polymethylmethacrylat, die zu einer Spinnlösung aus

20 Teilen der Polymermischung und
80 Teilen Dimethylformamid

verarbeitet wird. Die anschließenden Maßnahmen im Koagulationsbad erfolgen in analoger Weise.

Beispiel 35

Die Vorkehrungen zur Erstellung der Färbung sind hier die gleichen wie in Beispiel 1, es wird an dieser Stelle aber ein Mischpolymerisat eingesetzt, das man aus

88 Teilen Acrylnitril,
7 Teilen Vinylacetat und
5 Teilen Acrylsäure

gewinnt. Ansonsten bleibt die dort erwähnte Arbeitsvorschrift unverändert.

Beispiel 36

Man verfährt bei der Durchführung der Färbung wie in Beispiel 1, verwendet jedoch hier das folgende

Koagulationsbad aus

50 Teilen Dimethylacetamid,
49,5 Teilen Wasser und
0,5 Teilen einer Xanthen-Verbindung folgender Konstitution

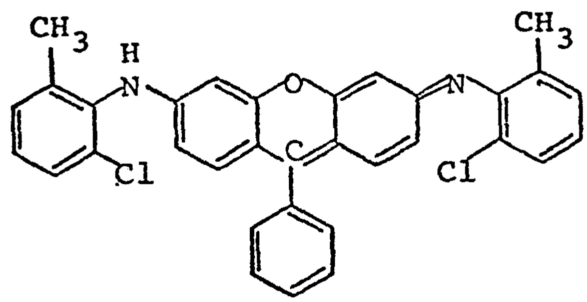

während die übrigen Anweisungen von dort übernommen werden.

Es resultiert eine brillante rote Färbung des Polymerisats mit ausgezeichneten Echtheitseigenschaften.

Beispiel 37:

Zur Erzeugung der Färbung wird wie in Beispiel 1 vorgegangen, in diesem Falle setzt man aber das folgende Koagulationsbad aus

50 Teilen Dimethylformamid,
47 Teilen Wasser,
2 Teilen einer Xanthen-Verbindung der Formel

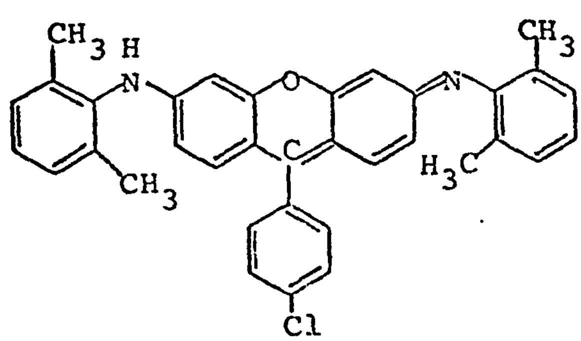

und 1 Teil einer Diphenylindolylmethan-Verbindung der Formel

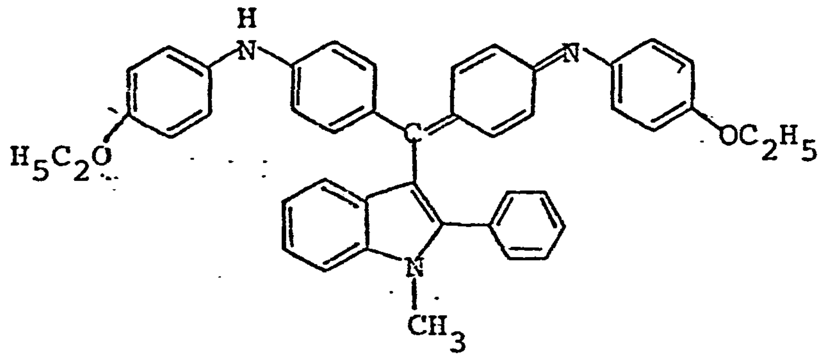

ein. Bezüglich der übrigen Behandlungsschritte werden keine Änderungen vorgenommen.

Man erzielt eine Färbung in tiefem Bordoton mit ausgezeichneten Echtheitseigenschaften auf dem in dieser Weise erzeugten Spinngut.

Beispiel 38

Man verfährt bei der Durchführung der Färbung wie in Beispiel 1, verwendet jedoch hier das folgende Koagulationsbad aus

50 Teilen Dimethylformamid,
48 Teilen Wasser,
0,5 Teilen einer Xanthen-Verbindung der Formel

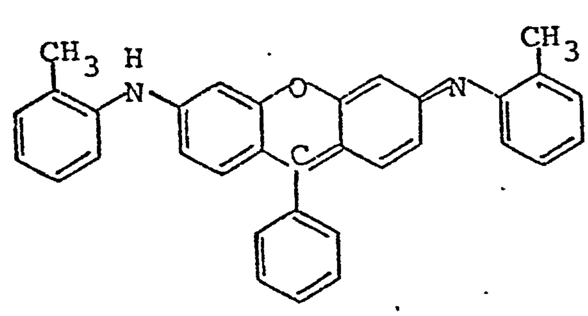

und 1,5 Teilen einer Triphenylmethan-Verbindung der Formel

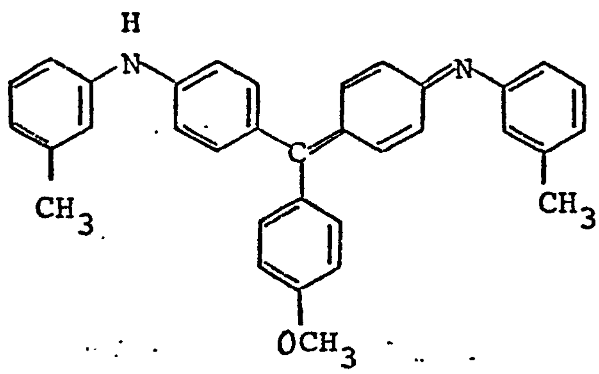

Nach Beendigung der weiteren Maßnahmen zur Fertigstellung der Färbung erhält man auf dem Fasergut einen gedeckten Braunton mit ausgezeichneten Echtheitseigenschaften.

Beispiel 39

Ein Acrylnitril-Mischpolymer, hergestellt aus 50 Teilen Acrylnitril, 46 Teilen Vinylidenchlorid und 4 Teilen Na-Methallylsulfonat wird 25%ig in Dimethylacetamid gelöst und durch Spinndüsen in ein Koagulationsbad folgender Zusammensetzung

55 Teile Dimethylformamid und
45 Teile Wasser,

gedrückt, die Koagulationstemperatur beträgt hierbei 50°C.

Im Anschluß an die Koagulation des Polymerisats wird das Gelkabel bei einer Temperatur von ca. 95°C in einem Reckbad folgender Zusammensetzung

56 Teile Dimethylacetamid
40 Teile Wasser und
4 Teile einer Azin-Verbindung der Formel

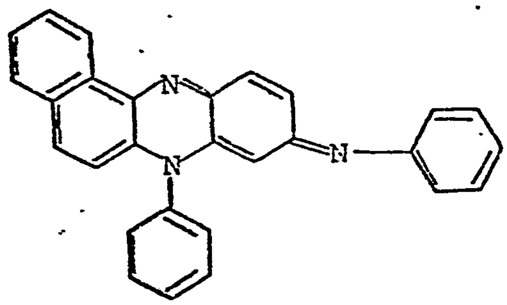

auf 200 % seiner Ausgangslänge gestreckt, wobei der pH-Wert dieser Flotte durch Zugabe von Essigsäure auf 7 gehalten wird. Danach wird das so gefärbte Faserkabel in üblicher Weise durch weiteres Recken, Waschen, Dämpfen, Avivieren, Trocknen, Kräuseln und Schneiden bzw. Reißen fertiggestellt.

Man erhält auf der Ware eine tiefe Marineblaufärbung mit ausgezeichneten Echtheitseigenschaften.

PATENTANSPRÜCHE

1. Verfahren zum kontinuierlichen Färben im Zuge des Herstellungsprozesses von nach einem üblichen Naßspinnverfahren aus organische Lösemittel aufweisenden Spinnlösungen erzeugtem Fasergut aus sauer-modifizierten Polymeren oder Mischpolymeren des Acrylnitrils im Gelzustand mit organischen Lösungen von basischen Farbstoffen, dadurch gekennzeichnet, daß man das Fasergut mit Lösungen der Carbinolbasen oder Anhydrobasen aus der Reihe von carboxyl- oder sulfogruppenfreien, N-arylierten Triarylmethan-, Diarylindolylmethan-, Oxazin-, Xanthen- oder Azin-Farbstoffen in einem das organische Spinnlösemittel und Wasser enthaltenden Färbebad färbt.

2. Verfahren nach Anspruch 1, dadurch gekennzeichnet, daß man solche Farbstoff-Basen verwendet, die 1 bis 4 Arylaminogruppen enthalten, wobei der Arylrest gegebenenfalls durch nichtionogene Gruppen substituiert sein kann.

3. Verfahren nach einem der Anspruche 1 oder 2, dadurch gekennzeichnet, daß man als Farbstoff-Basen eine Triarylmethan-Verbindung der allgemeinen Formel (I)

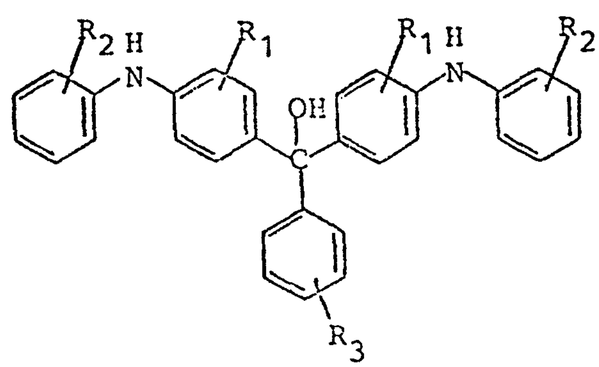

(I)

oder der allgemeinen Formel (II)

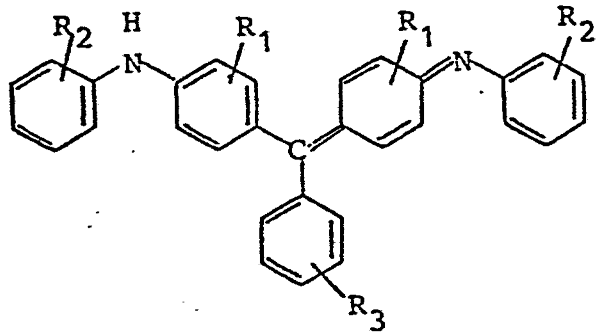

(II)

oder der allgemeinen Formel (III)

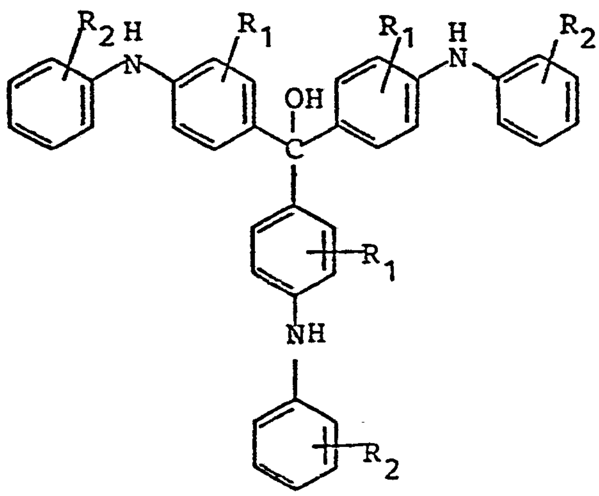

(III)

oder der allgemeinen Formel (IV)

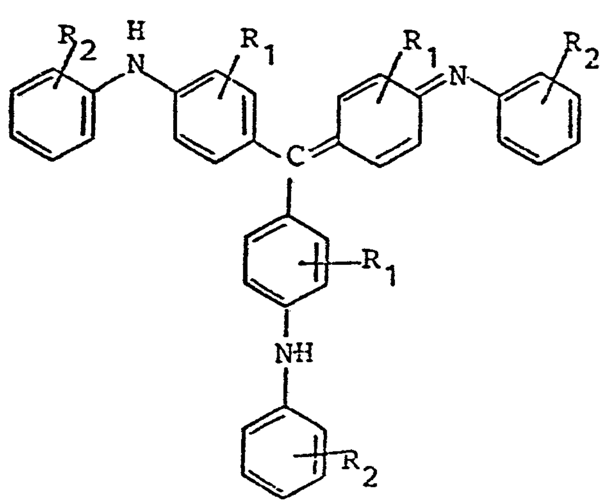

(IV)

verwendet, in welchen $R_1$, $R_2$ und $R_3$ gleich oder voneinander verschieden sind und jedes ein Wasserstoff- oder Halogenatom, eine gegebenenfalls substituierte niedere Alkylgruppe mit 1 bis 3 C-Atomen oder eine niedere Alkoxygruppe mit 1 bis 3 C-Atomen bedeuten, wobei $R_3$ zusätzlich eine in p-Stellung zum zentralen Kohlenstoffatom stehende Aminogruppe darstellen kann, und wobei $R_1$ und $R_2$ an dem zugehörigen Benzolring auch zweimal enthalten sein oder beide zusammen sowie der zugehörige Benzolring unter Ringschluß miteinander verbunden sein und einen gegebenenfalls substituierten Naphthalinrest bilden können.

4. Verfahren nach einem der Anspruche 1 oder 2, dadurch gekennzeichnet, daß man als Farbstoff-Basen eine Diarylindolylmethan-Verbindung der allgemeinen Formel (V)

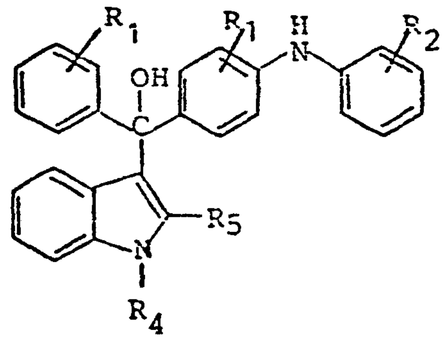

(V)

oder der allgemeinen Formel (VI)

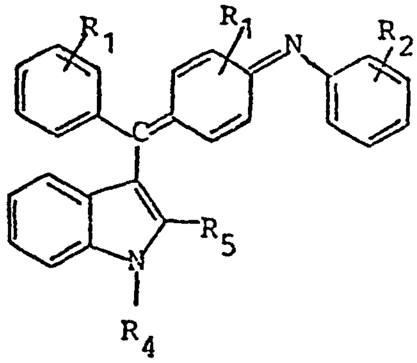

(VI)

oder der allgemeinen Formel VII

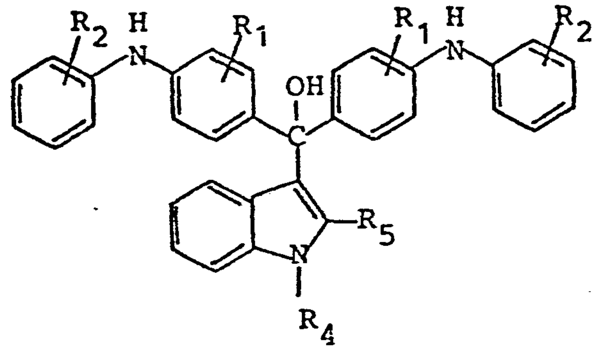

(VII)

oder der allgemeinen Formel VIII

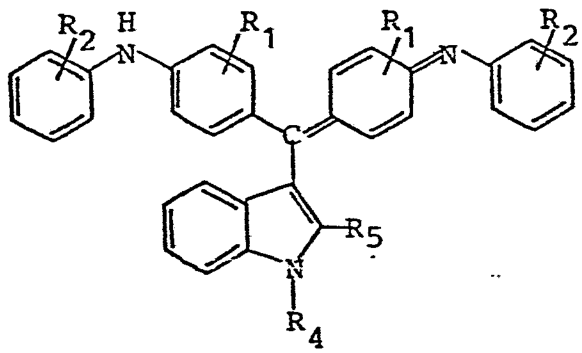

(VIII)

verwendet, in welchen $R_1$ und $R_2$ die in Anspruch 3 angegebenen Bedeutungen besitzen und wobei die in Formeln (V) bis (VIII) jeweils mehrfach auftretenden Substituenten gleich oder verschieden voneinander sein können;

$R_4$ für ein Wasserstoffatom, eine niedere Alkylgruppe mit 1 bis 6 C-Atomen, oder für einen Arylrest steht, der gegebenenfalls substituiert sein kann; und

$R_5$ ein Wasserstoffatom, eine niedere Alkylgruppe mit 1 bis 4 C-Atomen oder ein Arylrest ist.

5. Verfahren nach einem der Ansprüche 1 oder 2, dadurch gekennzeichnet, daß man als Farbstoff-Basen eine Xanthen-Verbindung der allgemeinen Formel (IX)

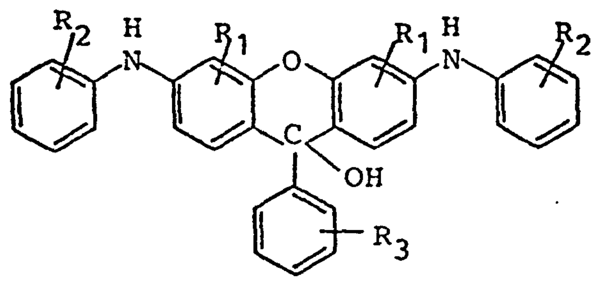

(IX)

oder der allgemeinen Formel (X)

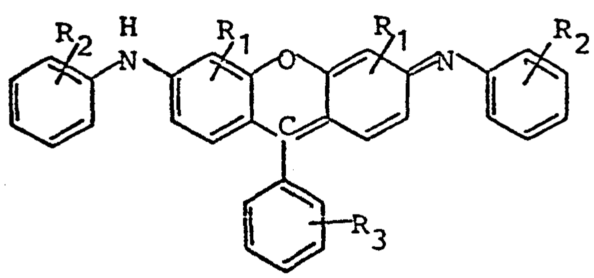

(X)

verwendet, in welchen $R_1$, $R_2$ und $R_3$ die in Anspruch 3 angegebenen Bedeutungen besitzen und wobei die in Formeln (IX) und (X) jeweils mehrfach auftretenden Substituenten gleich oder verschieden voneinander sein können.

6. Verfahren nach einem der Ansprüche 1 oder 2, dadurch gekennzeichnet, daß man als Farbstoff-Base eine Oxazin -Verbindung der allgemeinen Formel (XI)

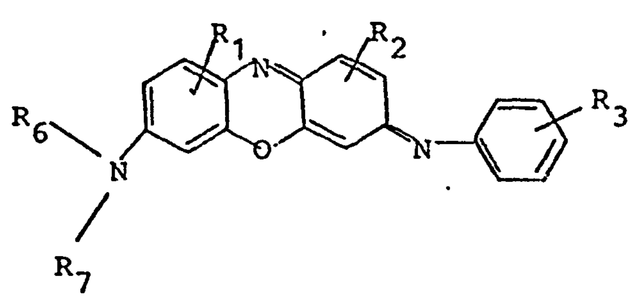

(XI)

verwendet, in welcher $R_1$, $R_2$ und $R_3$ die in Anspruch 3 angegebenen Bedeutungen besitzen; und

$R_6$ und $R_7$ gleich oder verschieden sind und jedes ein Wasserstoffatom, eine niedere Alkylgruppe mit 1 bis 6 C-Atomen, oder einen gegebenenfalls substituierten Aryl- oder Aralkylrest darstellt.

7. Verfahren nach einem der Ansprüche 1 oder 2, dadurch gekennzeichnet, daß man als Farbstoff-Base eine Azin-Verbindung der allgemeinen Formel (XII)

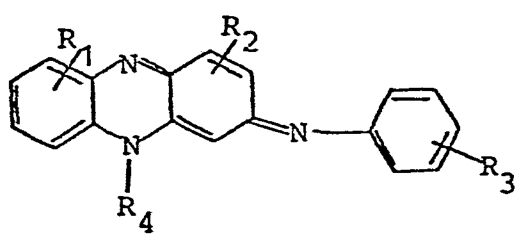

(XII)

oder der allgemeinen Formel (XIII)

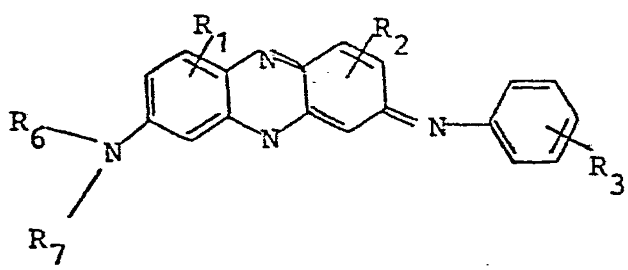

(XIII)

verwendet, in welchen $R_1$, $R_2$, $R_3$, $R_4$, $R_6$ und $R_7$ die in Ansprüchen 3, 4 und 6 angegebenen Bedeutungen besitzen.

8. Verfahren nach einem der Ansprüche 1 bis 7, dadurch gekennzeichnet, daß man Gemische von mehr als einer dieser Carbinolbasen oder Anhydrobasen miteinander oder untereinander verwendet.

9. Verfahren nach einem der Ansprüche 1 bis 7, dadurch gekennzeichnet, daß man Gemische dieser Carbinolbasen oder Anhydrobasen gemeinsam mit freien Farbstoff-Basen anderer Konstitutionen verwendet.